Europäisches Patentamt

European Patent Office

Office européen des brevets

(11) Veröffentlichungsnummer: **0 223 933 B1**

## (12) EUROPÄISCHE PATENTSCHRIFT

(45) Veröffentlichungstag der Patentschrift: **02.12.92**

(21) Anmeldenummer: **86111927.9**

(22) Anmeldetag: **28.08.86**

(51) Int. Cl.⁵: **G11B 5/127**, G11B 5/21

(54) Verfahren zur Herstellung von Magnetköpfen.

(30) Priorität: **29.11.85 DE 3542242**
**31.05.86 DE 3618427**

(43) Veröffentlichungstag der Anmeldung:
**03.06.87 Patentblatt 87/23**

(45) Bekanntmachung des Hinweises auf die
Patenterteilung:
**02.12.92 Patentblatt 92/49**

(84) Benannte Vertragsstaaten:
**DE FR GB IT**

(56) Entgegenhaltungen:

**PATENT ABSTRACTS OF JAPAN vol. 9, no. 177 (P-375)(1900) 23 Juli 1985, & JP-A-60 50608**

**PATENT ABSTRACTS OF JAPAN vol. 6, no. 175 (P-141)(1053) 09 September 1982, & JP-A-57 92415**

(73) Patentinhaber: **GRUNDIG E.M.V. Elektro-Mechanische Versuchsanstalt Max Grundig holländ. Stiftung & Co. KG.
Kurgartenstrasse 37
W-8510 Fürth/Bay.(DE)**

(72) Erfinder: **Eckstein, Karlheinz
Geissäckerstrasse 46
W-8510 Fuerth/Bayern(DE)**

(74) Vertreter: **Kolb, Max
Kurgartenstrasse 37
W-8510 Fuerth/Bayern(DE)**

## Beschreibung

Die vorliegende Erfindung betrifft ein Verfahren zur Herstellung von Magnetköpfen mit den im Oberbegriff des Anspruchs 1 angegebenen Merkmalen.

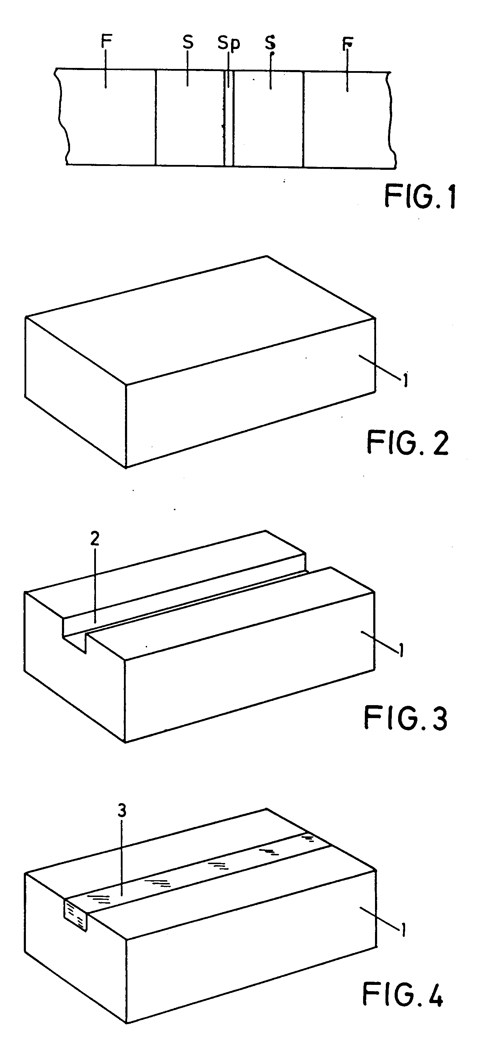

Ein solches Verfahren dient insbesondere zur Herstellung von sogenannten MIG (metal-in-gap)-Magnetköpfen, die aufgrund ihrer magnetischen Eigenschaften zur Aufzeichnung von Videosignalen auf hochkoerzitive Bänder, insbesondere Metallpartikel-Bänder (MP-Bänder) oder bedampfte Metallbänder (ME-Bänder), geeignet sind. Den grundsätzlichen Aufbau eines Kopfspiegels eines derartigen Magnetkopfes zeigt die Figur 1. Der Spalt Sp des Kopfes ist beidseitig von einer weichmagnetischen Schicht mit hoher Permeabilität bzw. Sättigungsinduktion umgeben.

Ein Herstellverfahren der im Oberbegriff des Anspruchs 1 geschilderten Art ist teilweise aus "Patent Abstracts of Japan, Vol. 6, Nr. 175, (P-141), [1053], 9.9.83 und JP-A-57-92415" bekannt.

Darin wird ein Verfahren zum wirtschaftlichen Herstellen eines Magnetkopfes beschrieben. In einen Ferrit-Block werden erste Nuten eingebracht. Rechtwinklig zu diesen ersten Nuten kommt eine zweite Nut mit geringerer Tiefe. In die ersten Nuten werden nun Streifen aus einer amorphen magnetischen Legierung eingelegt. In die zweite Nut kommt ein Glaslot, welches geschmolzen wird und somit die zweite Nut ausfüllt und die Streifen der magnetischen Legierung in den ersten Nuten befestigt. Die über die Blockfläche ragenden Teile, wie Legierungsstreifen und Glaslot, werden nun bis zur Blockfläche abgeschliffen und die Fläche poliert. Diese Fläche wird zur späteren Spaltfläche. Neben der mit Glaslot gefüllten zweiten Nut wird eine dritte Nut eingearbeitet, die parallel zur zweiten Nut verläuft und im späteren Magnetkopf die Wicklungsöffnung bildet. Der so entstandene Block wird nun mittig und entlang der glasgefüllten zweiten Nut getrennt, wodurch zwei Blockhälften entstehen, die nach Aufbringen eines Spaltmaterials zusammengeschmolzen oder geklebt werden. Aus diesem kompletten Block werden nun die einzelnen Kopfblöcke geschnitten und durch weitere, bekannte Arbeitsschritte zum funktionsfähigen Kopf weiter verarbeitet.

Weiterhin ist in "Patent Abstracts of Japan, Vol. 9, Nr. 177, (P-375), [1900] , 23.7.85, und JP-A-60-50608" ein Verfahren zur Herstellung eines Magnetkopfes beschrieben, das zum Ziel hat, eine gute Verbindungsfestigkeit zwischen den beiden Kernhälften zu erreichen. Bei diesen Verfahren werden in einen Block aus nichtmagnetischem Material mehrere parallele Nuten eingebracht. Auf die so entstandene Oberfläche mit den Nuten wird anschließend ein metallisches Magnetmaterial aufgebracht. Die Breite der Nuten entsprechen der späteren Spaltlänge des Magnetkopfes. Das aufgebrachte metallische Magnetmaterial wird nun bis auf eine bestimmte Höhe mechanisch abgetragen und man erhält eine glatte Oberfläche, mit der ein Ferrit-Block mittels geschmolzenem Glas oder anderer Befestigungsmoglichkeiten verbunden wird. Nachdem das nichtmagnetische Material bis zur Erreichung des magnetischen Materials abgetragen worden ist, wird der so entstandene Block in mehrere Streifen-Paare getrennt. In jeden zweiten Streifen wird nun eine den späteren Wickelraum bildende Nut eingebracht und die später die Spaltfläche bildenden Flächen der beiden Blöcke erhalten durch mechanische Bearbeitung glatte, saubere Oberflächen, die, aneinandergelegt, mit Glas verschmolzen werden. Aus diesem Block werden nun die eigentlichen Kopf-Blöcke geschnitten, die durch weitere gebräuchliche Verfahrensschritte, wie Schleifen, Läppen, Wickeln usw., zum kompletten Magnetkopf werden.

Beide geschilderten Verfahren weisen den Nachteil auf, daß sich das durch den Kopfspalt getrennte Magnetmaterial der beiden Kernhälften relativ leicht von ihrem jeweiligen Träger ablösen kann.

Ausgehend von diesem Stand der Technik liegt der vorliegenden Erfindung die Aufgabe zugrunde, ein Verfahren zur Herstellung von Magnetköpfen anzugeben, bei dem die Vorprofilierung einfach ist und bei dem eine Ablösung der aufgesputterten oder aufgedampften Schicht eines Materials mit hoher Permeabilität vermieden wird.

Diese Aufgabe wird durch die im kennzeichnenden Teil des Patentanspruchs 1 angegebenen Merkmale gelöst. Vorteilhafte Ausgestaltungen ergeben sich aus den Unteransprüchen.

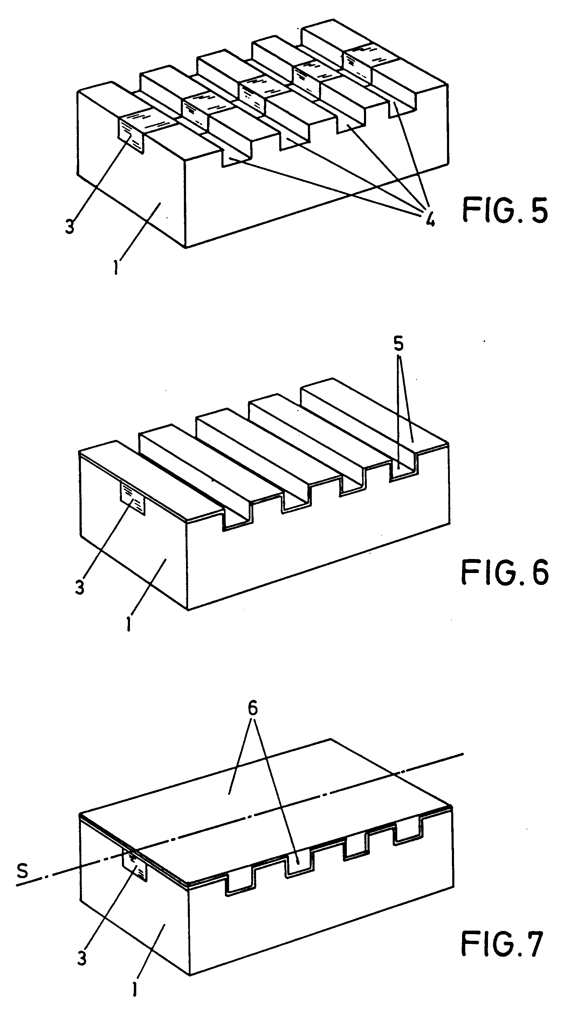

Die Vorteile der Erfindung bestehen im wesentlichen darin, daß bei der Vorprofilierung des Ferritblocks nur eine einzige "Glas"-Nut eingebracht werden muß und daß eine Ablösung der aufgesputterten oder aufgedampften Sendustschicht vom Kernträger vermieden wird, da die genannten weiteren Nuten zunächst mit einer Haftvermittlungsschiecht versehen und anschließend vollständig mit Sendustlegierung gefüllt werden. Die Verwendung einer Sendust-Legierung als Kernhälften-Material hat z.B. gegenüber der in dem Verfahren nach "Patent Abstracts of Japan, Vol. 6, No. 175, (P-141), [1053], 9.9.83 und JP-A-57-92415" verwendeten amorphen magnetischen Legierung den Vorteil, daß sie wesentlich höher erhitzt werden kann, wodurch der Einsatz eines bei höherer Temperatur schmelzenden Glaslotes möglich wird, was wiederum zu einer wesentlich höheren Festigkeit der Verbindung der Blockhälften führt. Weitere vorteilhafte Eigenschaften der Erfindung ergeben sich aus der beispielhaften Erläuterung des beanspruchten Verfahrens anhand der Figuren 2 bis 10.

Als Ausgangsmaterial dient ein quaderförmiger Ferritblock 1, wie er in Fig. 2 gezeigt ist. In diesen Ferritblock 1 wird eine Nut 2 eingeschliffen, wie es aus der Fig. 3 hervorgeht. Diese Nut 2 verläuft parallel zum späteren Arbeitsspalt der aus dem Ferritblock gewonnenen Magnetköpfe. Die Nut 2 wird mit einem nichtmagnetischen Material gefüllt, vorzugsweise mit geschmolzenem Glas, wie es in Fig. 4 angedeutet ist. Im nächsten Arbeitsschritt werden weitere Nuten 4 eingebracht.

Das Einbringen dieser weiteren Nuten 4 kann durch Einschleifen oder durch Naßätzen oder Plasmaätzen (Sputterätzen) erfolgen. Ein Naßätzen oder Plasmaätzen ist deshalb möglich, weil die weiteren Nuten 4 - beispielsweise im Gegensatz zur Glasnut eng und flach sind. Das Ätzen bietet im Gegensatz zum Schleifen den Vorteil, daß das Gefüge bzw. die Kristallstruktur des Ferrits nicht angegriffen wird und der spätere Magnetkopf bessere magnetische Eigenschaften aufweist.

Die Tiefe der weiteren Nuten 4 wird so gewählt, daß sie der späteren Spalthöhe des Magnetkopfes angepaßt ist, bzw. daß der spätere Rückschlußbereich des Magnetkopfes nicht erfaßt wird. Ihre Breite ist nur geringfügig (d. h. um die Dicke der Haftvermittlungsschicht) größer als die spätere Spurbreite bzw. Spaltlänge. Dies ist in Fig. 5 gezeigt. Der so erhaltene Block wird anschließend mit einer dünnen Haftvermittlungsschicht 5 bedampft oder besputtert, wie es aus Fig. 6 ersichtlich ist.

Danach wird die Haftvermittlungsschicht 5 mit Sendustlegierung 6 derart bedampft oder besputtert, daß die weiteren Nuten 4 vollständig mit Sendustlegierung gefüllt sind. Bei einem derartigen Vorgehen ist die spätere Spurbreite bzw. Spaltlänge bereits durch den Einschleif- bzw. Einätzvorgang festgelegt. Eine ständige Kontrolle bzw. eine laufende Messung der Dicke der aufgesputterten oder aufgedampften Sendustschicht während des Sputtervorgangs ist nicht mehr notwendig. Ferner ist es bei einem derartigen Vorgehen nahezu ausgeschlossen, daß es zu einer Ablösung der Sendustschicht vom Trägermaterial kommt. Es ist lediglich darauf zu achten, daß die weiteren Nuten 4 vollständig mit Sendustlegierung gefüllt sind, wie es in Fig. 7 gezeigt ist.

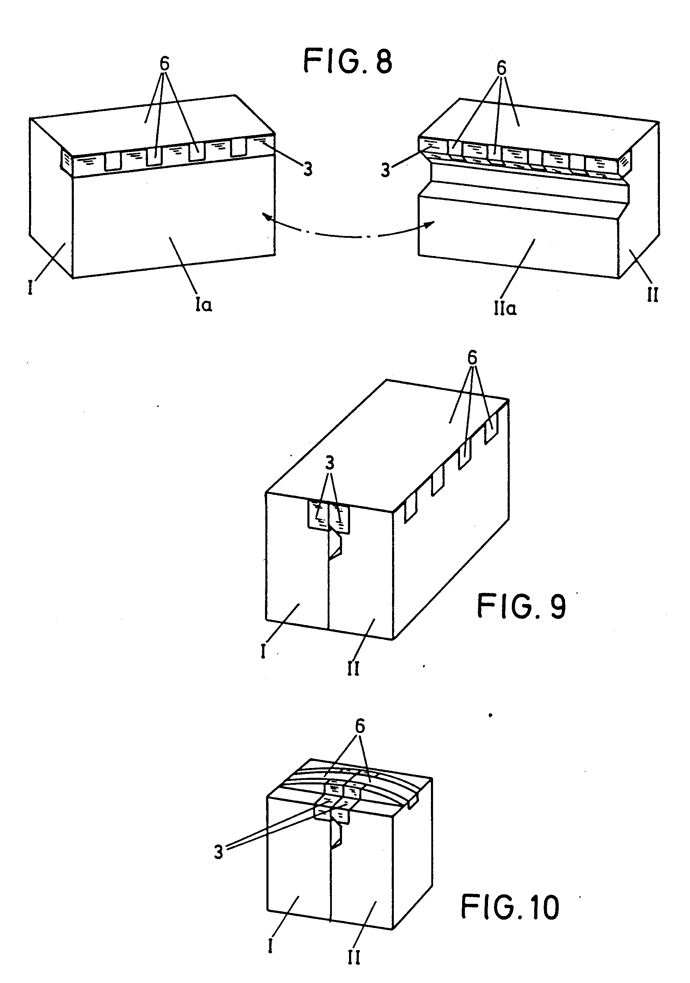

Im nächsten Arbeitsschritt wird der Block 1 längs der in Fig. 7 gestrichelten Linie S in Blockhälften I und II getrennt und die Blockhälfte II mit dem Wickelraum für die Spule versehen, wie es Fig. 8 zeigt. Anschließend werden die Spaltebenen Ia und IIa der beiden Blockhälften I und II geglättet, mit nichtmagnetischem Spaltmaterial (z. B. Aluminiumoxid oder Siliciumoxid) bedampft oder besputtert und die beiden Blockhälften nach geeigneter Orientierung mit (nicht gezeichnetem) Glaslot verlötet oder mit einem Kleber verbunden, wie es in Fig. 9 gezeigt ist. Der so erhaltene Block wird bis auf die Spalthöhe abgeschliffen und die Einzelköpfe getrennt. Ein letztendlich erhaltener Einzelkopf ist aus der Fig. 10 ersichtlich.

Das Einbringen der Nut 2, des Wickelraumes für die Spule und das Abtragen des fertigen Blokkes auf Spalthöhe erfolgt in vorteilhafter Weise wegen der vergleichsweise großen abzutragenden Ferritmenge durch Schleifen. Es ist aber grundsätzlich auch denkbar, andere Bearbeitungs-Verfahren anzuwenden.

**Patentansprüche**

1. Verfahren zur Herstellung von Magnetköpfen mit Kernhälften aus Ferrit mit einer auf das Ferrit aufgebrachten Schicht weichmagnetischer Legierung hoher Permeabilität und mit nichtmagnetischem Material im Bereich des Arbeitsspaltes, bei dem folgende Verfahrensschritte vorgesehen sind:
   - Einbringen von ersten (2) fund rechtwinklig dazu zweiten Nuten (4) in den Kernblock,
   - Ausfüllen der Nuten mit einer Legierung (6) mit hoher Permeabilität,
   - Einbringen des nichtmagnetischen Materials (3) in den Bereich des Arbeitsspaltes,
   - Schleifen einer Wickelraum-Nut,
   - weitere Bearbeitung nach bekannten Verfahrensschritten, wie Trennen des Blokkes, Schleifen, Aufbringen des Spaltmaterials, Zusammenfügen der Kopfhälften, Trennen in Einzelköpfe, Profilschleifen, Aufbringen von Wicklungen,
   **dadurch gekennzeichnet,** daß
   - eine erste Nut (2) mittig in einen Ferritblock (1) parallel zum späteren Arbeitsspalt eingebracht wird,
   - diese erste Nut (2) mit einem Glaslot ausgefüllt wird,
   - rechtwinklig zur ersten Nut (2) weitere Nuten (4) eingebracht werden, deren Tiefe der späteren Spalthöhe angepaßt ist und deren Breite nur um die zweifache Dicke einer Haftvermittlungsschicht (5) größer als die spätere Spaltlänge ist,
   - eine Haftvermittlungsschicht (5) aufgedampft oder aufgesputtert wird,
   - die Legierung mit hoher Permeabilität, mit der die Nuten (4) durch Sputtern vollständig ausgefüllt werden, Sendust ist.

2. Verfahren nach Anspruch 1, **dadurch gekennzeichnet,** daß das Einbringen der weiteren Nuten (4) durch Einätzen erfolgt.

3. Verfahren nach Anspruch 2, **dadurch gekennzeichnet,** daß das Einätzen der weiteren Nuten (4) durch Naßätzen erfolgt.

4. Verfahren nach Anspruch 2, **dadurch gekennzeichnet,** daß das Einätzen der weiteren Nuten (4) durch Plasmaätzen erfolgt.

5. Verfahren nach Anspruch 1, **dadurch gekennzeichnet,** daß das Einbringen der weiteren Nuten (4) durch Einschleifen erfolgt.

## Claims

1. Process for producing magnetic heads having core halves of ferrite with a layer of soft-magnetic alloy of high permeability applied to the ferrite and with nonmagnetic material in the area of the working gap, in which the following process steps are provided:
   - making of first grooves (2) and, at right angles thereto, second grooves (4) in the core block,
   - filling the grooves with an alloy (6) of high permeability,
   - introducing the non-magnetic material (3) into the area of the working gap,
   - grinding a winding space groove,
   - further working by known process steps, such as separating the block, grinding, applying the gap material, joining together the head halves, separating into individual heads, profile grinding, applying windings,
   
   characterised in that
   - a first groove (2) is made centrally in a ferrite block (1), parallel to the subsequent working gap,
   - this first groove (2) is filled with a glass solder,
   - at right angles to the first groove (2), further grooves (4) are made, the depth of which is adapted to the subsequent gap height and the width of which is greater than the subsequent gap length only by twice the thickness of an adhesion-promoting layer (5),
   - an adhesion-promoting layer (5) is vapour-deposited or sputtered on,
   - the alloy of high permeability with which the grooves (4) are completely filled by sputtering is sendust.

2. Process according to Claim 1, characterised in that the making of the further grooves (4) is performed by etching in.

3. Process according to Claim 2, characterised in that the etching in of the further grooves (4) is performed by wet etching.

4. Process according to Claim 2, characterised in that the etching in of the further grooves (4) is performed by plasma etching.

5. Process according to Claim 1, characterised in that the making of the further grooves (4) is performed by grinding in.

## Revendications

1. Procédé pour fabriquer des têtes magnétiques comportant des demi-noyaux en ferrite avec une couche d'alliage magnétique doux de haute perméabilité, déposée sur la ferrite, et avec un matériau amagnétique dans la zone de l'entrefer de travail, selon lequel il est prévu les étapes opératoires suivantes:
   - formation d'une première rainure (2) et d'une seconde rainure (4), perpendiculairement à la première, dans le bloc du noyau,
   - remplissage des rainures avec un alliage (6) possédant une haute perméabilité,
   - introduction du matériau amagnétique (3) dans la zone de l'entrefer de travail,
   - meulage d'une rainure formant espace de bobinage,
   - traitement ultérieur selon des étapes opératoires connues, comme par exemple subdivision du bloc, polissage, dépôt du matériau de l'entrefer, réunion des moitiés de tête, subdivision en têtes individuelles, polissage de profil, dépôt d'enroulements,
   
   caractérisé en ce que
   - on forme une première rainure (2) dans la partie médiane d'un bloc de ferrite (1) parallèlement à l'entrefer de travail obtenu ultérieurement,
   - on remplit cette première rainure (2) avec un verre fusible,
   - perpendiculairement à la première rainure (2), on aménage d'autres rainures (4), dont la profondeur est adaptée à la hauteur ultérieure de l'entrefer et dont la largeur est supérieure, seulement du double de l'épaisseur d'une couche d'adhésif (5), à la longueur ultérieure de l'entrefer,
   - on dépose par évaporation ou pulvérisation une couche adhésive (5),
   - l'alliage à haute perméabilité, qui est utilisé pour remplir complètement les rainures (4) par pulvérisation, est du sendust.

**2.** Procédé selon la revendication 1, caractérisé en ce que la formation des autres rainures (4) est obtenu par corrosion.

**3.** Procédé selon la revendication 2, caractérisé en ce que la formation des autres rainures (4) par corrosion s'effectue selon une corrosion par voie humide.

**4.** Procédé selon la revendication 2, caractérisé en ce que la formation des autres rainures (4) par corrosion s'effectue au moyen d'une corrosion plasmatique.

**5.** Procédé selon la revendication 1, caractérisé en ce que l'aménagement des autres rainures (4) s'effectue par meulage.

F    S   Sp   S    F

FIG.1

FIG. 2

2

1

FIG.3

3

1

FIG.4

FIG.5

FIG.6

FIG.7

# FIG. 8

# FIG. 9

# FIG.10